(19) Europäisches Patentamt
European Patent Office
Office européen des brevets

(11) EP 1 232 873 B1

(12) **EUROPEAN PATENT SPECIFICATION**

(45) Date of publication and mention of the grant of the patent: **15.06.2005 Bulletin 2005/24**

(21) Application number: **00915342.0**

(22) Date of filing: **05.04.2000**

(51) Int Cl.7: **B41M 5/00**, C08L 71/02, C08L 101/00, C08L 23/08, B41J 2/01, C08J 5/18

(86) International application number: **PCT/JP2000/002190**

(87) International publication number: **WO 2001/078990 (25.10.2001 Gazette 2001/43)**

(54) **RESIN COMPOSITION FOR INK-JET RECORDING SHEET, THE RECORDING SHEET, METHOD OF THE RECORDING, AND PROCESS FOR PRODUCING THE RECORDING SHEET**

HARZZUSAMMENSETZUNG ZU EINEM TINTENSTRAHLAUFZEICHNUNGSBLATT, DAS AUFZEICHNUNGSBLATT, VERFAHREN ZUR AUFZEICHNUNG UND VERFAHREN ZUR HERSTELLUNG DES AUFZEICHNUNGSBLATTES.

COMPOSITION DE RESINE POUR PAPIER D'IMPRESSION A JET D'ENCRE, LEDIT PAPIER D'IMPRESSION, PROCEDE D'IMPRESSION ET PROCEDE DE FABRICATION DUDIT PAPIER D'IMPRESSION

(84) Designated Contracting States:
**DE ES FR GB IT NL**

(43) Date of publication of application:
**21.08.2002 Bulletin 2002/34**

(73) Proprietors:
- **Dai-Ichi Kogyo Seiyaku Co., Ltd.**
  **Kyoto-shi, Kyoto 600-8873 (JP)**
- **MITSUBISHI PLASTICS INC.**
  **Chiyoda-ku, Tokyo 100-0005 (JP)**

(72) Inventors:
- **MATSUO, Katsuaki**
  **Kyoto-shi, Kyoto 600-8806 (JP)**
- **TSUBAKI, Takayuki**
  **Kyoto-shi, Kyoto 615-8024 (JP)**

(74) Representative: **West, Alan Harry et al**
**R.G.C. Jenkins & Co.**
**26 Caxton Street**
**London SW1H 0RJ (GB)**

(56) References cited:

| | |
|---|---|
| EP-A- 0 896 883 | JP-A- 7 001 829 |
| JP-A- 7 009 757 | JP-A- 7 195 826 |
| JP-A- 9 216 456 | JP-A- 10 006 637 |
| JP-A- 10 071 763 | JP-A- 10 147 058 |
| JP-A- 11 078 217 | JP-A- 11 123 869 |
| JP-A- 11 208 107 | JP-A- 2000 127 612 |
| JP-A- 2000 135 857 | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to a resin composition for an ink jet recording sheet, an ink jet recording sheet, a method for ink jet recording, and a method for producing an ink jet recording sheet particularly to a resin composition that is suitable for ink jet recording in which water-based ink is used, such an ink jet recording sheet, a method for ink jet recording in which water-based ink is used, and a method for producing such an ink jet recording sheet.

### BACK GROUND OF THE INVENTION

Ink jet recording is not noisy, allows for high-speed printing, makes multicolored printing possible by using plural number of nozzles, and permits low cost, therefore, it has been rapidly in widespread use as output devices of image information such as color copying, computer and the like. Media for this ink jet recording require properties as follows:

(1) absorption velocity of ink is rapid:
(2) ink can be immediately evaporated to dryness;
(3) diffusion upon absorption of ink, and formation of unclear marginal portions of dots are avoided;
(4) an incidence rate of lack in printing uniformity is low;
(5) clear interfaces between different color zones can be afforded; and
(6) stability of quality is kept over the long term preservation after printing, particularly low incidence of inferior alteration of images such as blurring even at a humid condition is available.

Conventionally, an ink jet recording sheet has been utilized, which comprises a water insoluble film as a support and hydrophilic polymer as a major component of an ink absorption layer that is overlaid on the support. The hydrophilic polymer may include water soluble polymers, e.g., polyvinyl alcohol, denaturated polyvinyl alcohol, polyvinyl pyrrolidone, gelatin and the like. Further, ink jet recording sheets comprising combinations of the above described hydrophilic polymer and a water absorbing resin, and combinations with porous inorganic powder such as silica, alumina and the like have been also proposed. However, problems are suggested that the water soluble resin overlaid as an ink absorption layer absorbs water during storage, thus blurring of ink is resulted, when recording is carried out using these ink jet recording sheets.

WO-A-9749561 discloses a resin composition for ink-jet printing material which comprises 13-95 wt.% crosslinked polyalkylene oxide resin, 3-80 wt.% polyamide resin and 1-50 wt.% cationic polymer.

In order to overcome such disadvantages, an ink jet recording sheet is proposed that is containing a cationic substance in the ink absorption layer, which would allow for prevention of blurring of ink through reactions between the cationic substance and anionic dyes that are used in the water-based ink. However, this type of ink jet recording sheet may lead to bleed out of the cationic substance on the surface of an ink-receiving layer due to an inferior mutual solubility of the cationic substance with the water soluble polymer. In addition, because such cationic substances have no thermoplasticity, restriction on manufacture may also be obliged, namely coating application with a solution must be conducted to produce the ink jet recording sheet. Moreover, fixative property of reaction products between the cationic substance and anionic dyes that are ingredients of ink may be insufficient, consequently, prevention of blurring phenomenon may sometimes be impossible. Additionally, alteration of color tone may be developed from reaction products of the cationic substance and anionic dyes.

As explained heretofore, it is actually in a condition that an ink jet recording sheet that satisfies all of the various desired properties has not yet been accomplished. The present invention was achieved taking into account of these problems, and is directed to provide with a resin composition for an ink jet recording sheet, an ink jet recording sheet, a method for ink jet recording, and a method for producing an ink jet recording sheet, which can be satisfactory in various desired properties, particularly an its absorption ability and a blurring suppressive effect.

### SUMMARY OF THE INVENTION

The present invention that was made to accomplish the objects set forth above is directed to a resin composition for ink jet recording, the composition comprising:

(1) a water-absorbing polymer having a weight average molecular weight of 10,000 to 300,000 of the general formula

$$\{AX^1 AR^1\} \qquad (I)$$

in which $X^1$ is the residue of an organic compound having two active hydrogen atoms, $R^1$ is the residue of a dicarboxylic acid and A is

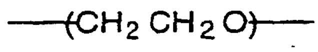

and

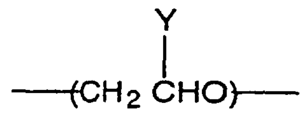

linked to form

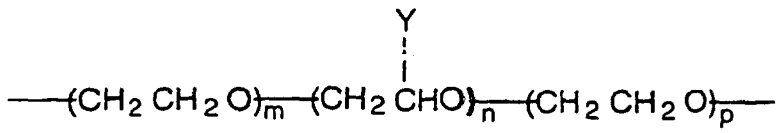

in which Y is a hydrocarbon group having two or more carbon atoms and each of m, n and p is an integer of 1 or more and predetermined to satisfy the conditions

$$44\ (\underline{m} + \underline{p})\ /n\ (\text{molecular weight of } [CH_2CHYO]) = 94/6 \text{ to } 80/20$$

$$\text{and } p/(m + p) \geq 1/2;$$

and
(2) a cationic polymer having a weight average molecular weight of 1,000 to 50,000.

The resin composition for an ink jet recording sheet of the present invention comprises (1) a component of a water-absorbing polymer compound represented by the formula (I) above and (2) a cationic polymer compound that is mutually solubilized with the compound (1), accordingly, blurring upon storage at a humid condition can be suppressed whilst an excellent ink absorption ability is retained.

In this aspect of the present invention, when the following compound (a) is used as the cationic polymer compound (2), bleed out on a surface of the ink-receiving layer is avoided due to their affinity to the water-absorbing polymer compound (1), besides, alteration of color tone resulting from reactions with the anionic dyes that are used as ingredients of ink are prevented.

(a) a cationic polymer compound having a weight average molecular weight ranging between 1000 and 50000 with linear and irregular arrangement comprising 65 mol% to 99 mol% of an ethylene structural unit represented by the following formula (II), less than or equal to 15 mol% of an acrylate structural unit represented by the following formula (III), and 1 mol% to 35 mol% of an acrylamide structural unit represented by the following formula (IV);

$$\{CH_2\ CH_2\} \qquad (II)$$

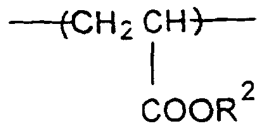

(III)

wherein $R^2$ represents an alkyl group having 1-4 carbon atoms)

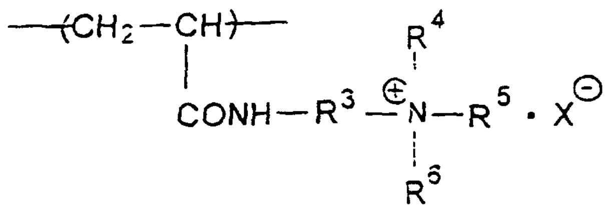

(IV)

wherein $R^3$ represents an alkylene group having 2-8 carbon atoms; $R^4$ and $R^5$ respectively represent an alkyl group having 1-4 carbon atoms: $R^6$ represents a hydrogen, an alkyl group having 1-12 carbon atoms, an aryl alkyl group having 7-12 carbon atoms, or an alicyclic alkyl group having 6-12 carbon atoms; and $X^{\ominus}$ represents a halogen ion, $CH_3OSO_3^-$ or $C_2H_5OSO_3^-$.)

The cationic polymer compound (2) of the above described (a) preferably comprises the acrylate structural unit represented by the formula (III), although the acrylate structural unit is not a necessary component to be contained therein. Therefore, mole fraction of this acrylate structural unit is defined only in terms of the upper limit (15 mol%), and the lower limit thereof is not particularly defined.

In the present invention set forth above, when mixing ratio by weight of the water-absorbing polymer compound (1) and the cationic polymer compound (2) is ranging between 50/50 and 99/1, well balanced ink absorption ability and blurring suppressive effect can be achieved.

In the present invention set forth above, when a cationic or nonionic surface active agent is contained in the resin composition, blurring upon storage at a humid condition can be more sufficiently suppressed. An amount of the surface active agent (3) to be contained may be preferably 1 wt% (percent by weight) to 10 wt%.

When an ink jet recording sheet is constituted by overlaying a substrate layer with an ink-receiving layer in which the resin composition for an ink jet recording sheet is used, and thereafter ink jet recording is performed through discharging small droplets of water-based color ink so that they are adsorbed to the ink-receiving layer, then clear images with less blurring upon storage at a humid condition can be resulted.

This ink jet recording sheet can be readily produced by: extruding a resin composition that constitutes a substrate layer into a sheet form, while extruding the above described resin composition for an ink jet recording sheet of the present invention also into a sheet form concurrently with the substrate layer, and simultaneously forming layers from both of the resin compositions.

## BEST EMBODIMENT FOR CARRYING OUT THE INVENTION

The most characteristic feature of an ink jet recording sheet according to the present invention is that the ink-receiving layer comprises a principal component of a water-absorbing polymer compound (1) :hat is represented by the above formula (I). Herein, "comprise a major component of a water-absorbing polymer compound (1)" means that the water-absorbing polymer compound (1) is a major polymer material of the ink-receiving layer. Specifically, the percentage content of the water-absorbing polymer compound (1) in the ink-receiving layer may be preferably greater than or equal to 50 wt%.

A part represented as "A" in the above formula (I) may be in an arrangement, wherein an alkylene oxide chain having more than or equal to 4 carbon atoms, which is designated by a recurrence number n. is interpositioned between an ethylene oxide chain designated by a recurrence number m and an ethylene oxide chain designated by a recurrence number p at opposite ends.

The above alkylene oxide chain having more than or equal to 4 carbon atoms, which is designated by a recurrence number n, may be for example, a butylene oxide chain that is derived from butylene oxide or an α-olefin oxide chain having more than or equal to 12 carbon atoms that is derived from α-olefin oxide having more than or equal to 12 carbon atoms. Namely, in the above formula (I), Y may be an ethyl group when the alkylene oxide chain

designed by a recurrence number n is a butylene oxide chain that is derived from butylene oxide. Meanwhile, Y may be a hydrocarbon group having more than or equal to 10 carbon atoms when the alkylene oxide chain designated by a recurrence number n is an α-olefin oxide chain having more than or equal to 12 carbon atoms that is derived from α-olefin oxide having more than or equal to 12 carbon atoms.

Besides, in cases where an α-olefin oxide chain is included, the α-olefin oxide having more than or equal to 12 carbon atoms from which the chain is derived is not particularly restricted as long as it is an epoxide compound containing an alkylene group having more than or equal to 12 carbon atoms, and may be more preferably an epoxide compound containing an alkylene group having carbon atoms ranging between 12 and 30. Such an α-olefin oxide may be used alone or as a mixture in combination of two or more kinds thereof.

When the alkylene oxide chain designated by a recurrence number n is a butylene oxide chain, the two ethylene oxide chains designated by the recurrence numbers m and p may be determined so that those chains are included in the designated part "A" in the above formula (I) from 80 wt% to 90 wt%, preferably from 82 wt% to 87 wt%. Further, when the alkylene oxide chain designated by a recurrence number n is an α-olefin oxide chain having more than or equal to 12 carbon atoms, the two ethylene oxide chains designated by the recurrence numbers m and p may be determined so that those chains are included in the designated part "A" in the above formula (I) from 90 wt% to 94 wt%, preferably from 92 wt% to 94 wt%. Accordingly, at the designated part "A" in the above formula (I), a value that is calculated by means of the following formula may be predetermined to be in the range between 80/20 and 94/6: (44 x(m + p)/(the molecular weight of the unit of the alkylene oxide having more than or equal to four carbon atoms) x n). For a reference, "44" herein denotes a molecular weight of ethylene oxide.

When the ratio of the two ethylene oxide chains designated by the recurrence numbers m and p is below the above range, it may result in a decrease of an ink absorption ability of the ink jet recording sheet. If this ratio is greater than the above range to the contrary, blurring of ink upon storage at a humid condition may occur as a result of absorbing water.

At the designated part "A" in the above formula (I), a value obtained by calculation: "p/(m + p)", namely a ratio of an ethylene oxide chain part designated by the recurrence number p in two of the ethylene oxide chains (parts designated by the recurrence numbers m and p) must be determined to be greater than or equal to 50%, and particularly preferably, in the range between 60% and 80%. Consequently, an esterification reaction and an ester exchange reaction can be readily carried out with dicarboxylic acid compound R' detailed below.

In the above described formula (I), a part designated as $X^1$ is a residue of an organic compound having two active hydrogen groups. The organic compounds having two active hydrogen groups may include for example, ethylene glycol, diethylene glycol, propylene glycol, dipropylene glycol, 1,4-butanediol, 1,6-hexanediol, neopentyl glycol, bisphenol A, polytetramethylene glycol; alicyclic diols such as cyclohexane-1,4-dimethanol and the like: amines such as butylamine, laurylamine, octylamine, cyclohexylamine, aniline and the like. These may be used alone or in combination of two or more kinds thereof.

In the above described formula (I), a part designated as $R^1$ is a residue of a dicarboxylic acid compound. The applicable dicarboxylic acid compounds may include for example, dicarboxylic acid dicarboxylic anhydride, lower alkyl ester of dicarboxylic acid and the like. Dicarboxylic acid described above may include for example, phthalic acid, isophthalic acid, terephthalic acid, malonic acid, succinic acid, sebacic acid, maleic acid, fumaric acid, adipic acid, itaconic acid and the like. Dicarboxylic anhydride described above may include for example, anhydrides of several kinds of dicarboxylic acids described above. In addition, the lower alkyl ester of licarboxylic acid described above may include for example, methyl ester, dimethyl ester, ethyl ester, diethyl ester, propyl ester. dipropyl ester and the like of several kinds of the dicarboxylic acids described above. These may be used alone or in combination of two or more kinds thereof. Among them in particular, dicarboxylic anhydride or lower alkyl ester of dicarboxylic acid may be preferably used in view of feasibility of the reactions.

Because this water-absorbing polymer compound (1) that is represented by formula (I) exhibits water absorption ability that is 5 to 15 times of its own weight, an ink absorption ability can be imparted to the ink-receiving layer through using this compound. Moreover, the water-absorbing polymer compound (1) can be formed into a shape like a sheet by extrusion because of its thermoplasticity, therefore, facilitated production of an ink jet recording sheet can be allowed.

An exemplary method for producing the water-absorbing polymer compound (I) that is represented by formula (I) is hereinafter explained. First, an organic compound having more than or equal to 2 carbon atoms is subjected to addition polymerization with ethylene oxide at approximately 90-200°C using caustic alkali such as sodium hydroxide or potassium hydroxide as a catalyst. Next, addition polymerization with alkylene oxide having more than or equal to 4 carbon atoms is effected thereto, and then further addition polymerization with ethylene oxide is followed. Namely, ethylene oxide, butylene oxide or α-olefin oxide having more than or equal to 12 carbon atoms, and then ethylene oxide are subjected to addition polymerization as a block in this order to an organic compound having two active hydrogen groups. By way of caution, the polyalkylene oxide compound that is obtained in this step may preferably have a weight average molecular weight ranging between 5000 and 30000, and particularly preferably have a weight

average molecular weight ranging between 10000 and 30000. When the weight average molecular weight is less than the above range, deterioration in formability of an ink-receiving layer may be resulted. To the contrary, when the weight average molecular weight is greater than the above range, remarkable lowering of reaction velocity for the alkylene oxide addition reaction may be accompanied. Next, a dicarboxylic acid compound is added to the polyalkylene oxide compound. Then, following elevation of the temperature, dehydration or dealcoholation is performed at a reduced pressure of 0.1 to $2.7 \times 10^3$ Pa while heating at 80-250°C. The reaction time may be generally from 30 minutes to 10 hours. Accordingly, the water-absorbing polymer compound (1) is obtained.

When dicarboxylic acid compound is added to the polyalkylene oxide compound, the incorporation ratio of both compounds is preferably determined in the range between 13.5 and 10.5 at an equivalent ratio.

Thus obtained water-absorbing polymer compound (1) may be preferably predetermined to have a weight average molecular weight ranging between 10000 and 300000, and particularly preferably between 50000 and 200000. Additionally, a value that is resulted from division of a weight average molecular weight of the water-absorbing polymer compound (1) obtained in such a manner with a weight average molecular weight of the polyalkylene oxide compound that is used for the production may be preferably greater than or equal to 3, more preferably in the range between 3 and 21, and still more preferably in the range between 5 and 21.

Another feature of the ink jet recording sheet according to the present invention is characterized by the point that the ink-receiving layer comprises a cationic polymer compound (2). Because the cationic polymer compound (2) may react with anionic dyes that are generally used in water-based ink, blurring of ink can be thereby prevented. In addition, because the cationic polymer compound (2) is a macro molecule, bleed out to the surface of the ink-receiving layer may not be resulted. By way of caution, the cationic polymer compound (2) herein means cationic substances having a weight average molecule weight greater than or equal to 1000, and preferably greater than or equal to 5000.

An amount of the cationic polymer compound (2) to be contained may be preferably in the range between 50/50 and 99/1, and more preferably in the range between 65 35 and 90 10 as a mixing ratio by weight of the water-absorbing polymer compound (1) and the cationic polymer compound (2). When the amount of the cationic polymer compound (2) is less than the above range, blurring of ink upon storage of the ink jet recording sheet at a humid condition may occur as a result of absorbing water. To the contrary, when the amount is greater than the above range, an ink absorption ability of the ink-receiving layer may be deteriorated.

As a suitably used cationic polymer compound (2),

(a) a cationic polymer compound having a weight average molecular weight ranging between 1000 and 50000 with a linear and irregular arrangement comprising 65 mol% to 99 mol% of an ethylene structural unit represented by the above formula (II), less than or equal to 15 mol% of an acrylate structural unit represented by the above formula (III), and 1 mol% to 35 mol% of an acrylamide structural unit represented by the above formula (IV).

The cationic polymer compound (2) of the above described (a) must comprise 65 mol% to 99 mol%, and more preferably, may comprise 65 mol% to 80 mol% of the ethylene structural unit represented by the above formula (II). When the content of the ethylene structural unit is less than the above range, mutual solubility with the water-absorbing polymer compound (1) may be decreased. To the contrary, when the content of the ethylene structural unit is greater than the above range, a blurring event may be resulted because of lack in available reactivity with the dyes due to insufficiently present acrylamide structural unit that participates in a reaction with the dyes.

The above described cationic polymer compound (2) of the above described (a) must comprise less than or equal to 15 mol%, and more preferably, may comprise 5 mol% to 10 mol% of an acrylate structural unit represented by the above formula (III). When the content of the acrylate structural unit is less than the above range, mutual solubility with the water-absorbing polymer compound (1) may not be achieved. When the content of the acrylate structural unit is greater than the above range to the contrary, there may be difficulty in producing the cationic polymer compound (2).

The above described cationic polymer compound (2) of the above described (a) must comprise 1 mol% to 35 mol%, and particularly preferably, may comprise 10 mol% to 30 mol%, of an acrylamide structural unit represented by the above formula (IV). When the content of the acrylamide structural unit is less than the above range, blurring of ink may occur due to existence of unreacted dyes because reaction equivalence with the dyes falls to an insufficient level. When the content of the acrylamide structural unit is greater than the above range to the contrary, extreme deterioration of mutual solubility with the water-absorbing polymer compound (1) may be resulted.

The cationic polymer compounds (2) of the above (a) have linear and irregular arrangements in each of the formula units. Thermoplasticity is acquired thereby and thermoforming of the ink-receiving layer becomes feasible combined with thermoplasticity of the water-absorbing polymer compound (1). Moreover, the weight average molecular weight of such cationic polymer compound (2) is in the range between 1000 and 50000, and being in the range between 5000 and 30000 is particularly preferred. When the weight average molecular weight is less than the above range, bleed out of the cationic polymer compound (2) may occur on the surface of the ink-receiving layer. When the weight average molecular weight is greater than the above range to the contrary, elevation of the melting viscosity may often

result in difficulties in mixing with the water-absorbing polymer compound (1).

It is preferred that the ink-receiving layer of the ink jet recording sheet according to the present invention comprises a cationic or nonionic surface active agent (3). On the grounds that hydrophilicity of the ink-receiving layer is increased thereby, absorption velocity of ink can be improved, and in addition, blurring of ink can be prevented.

Suitably employed cationic surface active agents (3) may include for example, secondary ammonium salt type cationic surface active agents, tertiary ammonium salt type cationic surface active agents, quaternary ammonium salt type cationic surface active agents. and the like, Besides, suitably employed nonionic surface active agents (3) may include for example, alkyl phenol type nonionic surface active agents, higher alcohol type nonionic surface active agents, higher fatty acid type nonionic surface active agents, pluronic type nonionic surface active agents, esters of propylene glycol fatry acid, esters of glycerol fatty acid, and the like.

An amount of the cationic or nonionic surface active agent (3) to be contained in the ink-receiving layer may be preferably 1 % by weight to 10 % by weight, and paricularly preferably, may be 2 % by weight to 5 % by weight. When the amount of the surface active agent · 3) is less than the above range, lowering of the ink absorption velocity may occur, or an incidence of ink blurring may be liable to increase. To the contrary, when the amount is greater then the above range, bleed out on the surface of the ink-receiving layer may occur, thereby stickiness on the surface may be resulted.

Although the thickness of the ink-receiving layer is not particularly limited as long as absorption of the ink can be provided, it is generally in the range between 10 μm and 50 μm, and particularly from 20 μm to 30 μm.

An ink jet recording sheet according to the present invention is constituted from a substrate layer and an ink-receiving layer that is overlaid said substrate layer. The material of the substrate layer is not particularly limited, however, a film that is constituted from water insoluble plastics, for example, polyester resins, polyamides, polyolefins and the like may be suitably used. In particular, polyester resins having superior film hardness, transparency, and property of adhesion to the receiving layer are preferable. Although the thickness of the substrate layer is not particularly limited, it is generally in the range between 50 μm and 100 μm, and particularly from 70 μm to 100 μm.

A method for producing an ink jet recording sheet of the present invention is explained below. First, a resin composition is prepared by: melting and admixing a water-absorbing polymer compound (1) and a cationic polymer compound (2) according to known methods; and adding cationic or nonionic surface active agent (3) if required. Next, the resin composition is pelletized, followed by melting, and extrusion into a film form while concomitantly overlaying the substrate layer so that an ink jet recording sheet can be produced. When the substrate layer is constituted from plastics, the ink jet recording sheet can be produced through so-called co-extrusion wherein overlaying is performed while extruding both of the ink-receiving layer and the substrate layer. Simplification of the process for production of the ink jet recording sheet can be achieved by this co-extrusion.

Furthermore, an ink jet recording sheet can be also produced by: dissolving the resin composition into a solvent that can dissolve the aforementioned resin composition used for the ink-receiving layer (e.g., a mixed solvent of toluene and methanol); and coating the dissolved composition on a substrate layer. For the coating process, several kinds of known means, for example, bar coating machine, roll coating machine, blade coating machine, kiss coating machine and the like can be employed.

When a substrate layer is overlaid with an ink-receiving layer by the above described extrusion or coating, a treatment on the surface of the substrate layer with primer may be conducted in order to improve the adhesion strength of the both layers, if necessary.

When ink jet recording is carried out using this ink jet recording sheet, water-based ink is rapidly absorbed into the ink-receiving sheet, thus clear images can be obtained. Additionally, even when the ink jet recording sheet is subjected to storage after printing at a humid condition for a long stretch of time, blurring of ink hardly occurs.

The effects exerted by the present invention would be apparent from the Examples below, however, those Examples should not be construed as any limitation of the present invention.

[Example 1]

A water-absorbing polymer compound (1) was prepared, with m being 52, n being 14, p being 155, Y being an ethyl group, $X^1$ being an ethylene glycol residue, and $R^1$ being a eicosanedioic acid residue in the above described formula (I). The weight ratio of alkylene oxide having 4 or more carbon atoms in the polyalkylene oxide compound was 11 wt% for this water-absorbing polymer compound (1). In addition, the weight average molecular weight of polyalkylene oxide residue represented by $AX^1A$ was 20294. Further, the weight average molecular weight of this water-absorbing polymer compound (1) was 154800. For a reference, measurement of a molecular weight was performed by determination through PEO conversion, using GPC in a water-based system with a mixed solution of acetonitrile and water with a ratio of 1:1 as a solvent for dissolving the water-absorbing polymer compound (1).

Meanwhile, a cationic polymer compound (2) was prepared, with $R^2$ being $C_2H_5$ in the above formula (III), $R^3$ being an ethylene group, $R^4$, $R^5$ and $R^6$ being methyl groups, and $X^-$ being $C_2H_5OSO_3^-$ in the above formula (IV). Molar

fractions (determined with NMR) in this cationic polymer compound (2) were: 65 mol% for an ethylene structural unit represented by the above formula (II); 5 mol% for an acrylate structural unit represented by the above formula (III); and 30 mol% for an acrylamide structural unit represented by the above formula (IV). Moreover, the weight average molecular weight (determined with GPC) of this cationic polymer compound (2) was 23000.

Then, 80 parts by weight of the water-absorbing polymer compound (1) and 20 parts by weight of the cationic polymer compound (2) were mixed using a double spindle extruder at an extrusion condition of 150°C, thus pelletization was accomplished. Next, the resulting pellet was extruded using a single spindle extruder at 150°C, thereby a film having 40 µm of thickness was formed. Finally, an ink jet recording sheet of Example 1 was produced through overlaying a polyethylene terephthalate film (100 µm of thickness) with thus formed film, followed by lamination process at 160°C.

[Example 2]

A water-absorbing polymer compound (1) was prepared, with m being 28, n being 2, p being 118, Y being a hydrocarbon group having 12-14 carbon atoms, $X^1$ being an ethylene glycol residue, and R' being a terephthalic acid residue in the above described formula (I). The weight ratio of alkylene oxide having 4 or more carbon atoms in the polyalkylene oxide compound was 6 wt% for this water-absorbing polymer compound (1). In addition, the weight average molecular weight of polyalkylene oxide residue represented by $AX^1A$ was 13873. Further, the weight average molecular weight of this water-absorbing polymer compound (1) was 97111, when it was determined in a similar manner to the method for measurement in the above Example 1.

Meanwhile, a cationic polymer compound (2) was prepared, with $R^2$ being $C_2H_5$ in the above formula (III), $R^3$ being an ethylene group, $R^4$ and $R^5$ being methyl groups, $R^6$ being a lauryl group, and $X^-$ being a chloride ion in the above formula (IV). Molar fractions (determined with NMR) in this cationic polymer compound (2) were: 70 mol% for an ethylene structural unit represented by the above formula (II); 10 mol% for an acrylate structural unit represented by the above formula (III); and 20 mol% for an acrylamide structural unit represented by the above formula (IV). Moreover, the weight average molecular weight (determined with GPC) of this cationic polymer compound (2) was 23000.

Then, 75 parts by weight of the water-absorbing polymer compound (1) and 25 parts by weight of the cationic polymer compound (2) were used to produce an ink jet recording sheet of Example 2 in a similar manner to the procedure in Example 1.

[Example 3]

A water-absorbing polymer compound (1) was prepared, with m being 42, n being 23, p being 168, Y being an ethyl group, $X^1$ being an ethylene glycol residue, and $R^1$ being a eicosanedioic acid residue in the above described formula (I). The weight ratio of alkylene oxide having 4 or more carbon atoms in the polyalkylene oxide compound was 18 wt% for this water-absorbing polymer compound (1). In addition, the weight average molecular weight of polyalkylene oxide residue represented by AX A was 21854. Further, the weight average molecular weight of this water-absorbing polymer compound (1) was 139860, when it was determined in a similar manner to the method for measurement in the above Example 1.

Then, 85 parts by weight of the water-absorbing polymer compound (1) and 15 parts by weight of the cationic polymer compound (2) as in Example 1 were used to produce an ink jet recording sheet of Example 3 in a similar manner to the procedure in Example 1.

[Example 4]

An ink jet recording sheet of Example 4 was produced in a similar manner to the procedure in Example 1 except that the 20 parts by weight of the cationic polymer compound (2) that was used in Example 1 was substituted for a mixture of 10 parts by weight of the cationic polymer compound (2) as in Example 1 and 10 parts by weight of lauryl trimethylammonium chloride as a cationic surface active agent (3) that had been previously mixed and pelletized with a heated roll at 150°C.

[Comparative Example 1]

An ink jet recording sheet of Comparative Example 1 was produced in a similar manner to the procedure in Example 1 except that 100 parts by weight of the water-absorbing polymer compound (1) used in Example 1 was used without using any cationic polymer compound (2).

[Comparative Example 2]

An ink jet recording sheet of Comparative Example 2 was produced in a similar manner to the procedure in Example 1 except that the 20 parts by weight of the cationic polymer compound (2) that was used in Example 1 was substituted for 20 parts by weight of lauryl trimethylammonium chloride as a cationic surface active agent (3).

[Test for ink absorption ability]

Printing was carried out on the ink jet recording sheet that were produced in each of the Examples and Comparative Examples, using ink jet printers (trade name "Epson PM750C"; and trade name "Canon BJC-455J"). At one minute after completion of the printing, printed portion of ink-receiving layer was rubbed softly with a finger, thus respective ink absorption ability was evaluated visually. The results were evaluated as:

"◎ ", highly excellent ink absorption ability without any change in the printed portion; "○", excellent ink absorption ability; "Δ", fairly inferior ink absorption ability; and ">", cases in which the ink came off with dirty printed portion. The results are illustrated in Table 1 below.

[Test for ink blurring property]

The ink jet recording sheets, which were subjected to printing similarly to the above described procedure, were left at a room temperature for 3 hours after completion of the printing. Then, the sheets were placed in a constant temperature and humidity chamber at a temperature of 35°C and a humidity of 90%, and then blurring of ink was observed visually after 24 hours and 120 hours. The results were evaluated as: "1", any blurring was not observed at all; "2", slight extent of blurring was observed; "3", definite blurring was observed; and "4", blurring was manifested so that the printing became beyond recognition. The results are illustrated in Table 1 below.

Table 1

| Results of evaluation on each of the ink jet recording sheets | | | | | | | |
|---|---|---|---|---|---|---|---|
| | | Example 1 | Example 2 | Example 3 | Example 4 | Comparative Example 1 | Comparative Example 2 |
| Ink absorption ability | PM750C | ○ | ○ | ○ | ○ | Δ | ○ |
| | BJC-455J | ◎ | ◎ | ◎ | ◎ | ○ | ◎ |
| Ink blurring property (after 24 hours) | PM750C | 1 | 1 | 1 | 1 | 4 | 2 |
| | BJC-455J | 1 | 1 | 1 | 1 | 3 | 2 |
| Ink blurring property (after 120 hours) | PM750C | 2 | 2 | 2 | 2 | 4 | 3 |
| | BJC-455J | 1 | 1 | 1 | 1 | 4 | 3 |

As is shown in Table 1, it was apparent that the ink jet recording sheet produced in each of the Examples was superior in respect to both of the ink absorption ability and ink blurring property when compared to those of the ink jet recording sheet produced in each of the Comparative Examples. Consequently, advantages of the present invention were demonstrated.

## INDUSTRIAL APPLICABILITY

As explained herein above, according to the present invention, better ink absorption ability can be afforded when ink jet recording is carried out, and moreover, blurring of ink can be avoided that was conventionally disadvantageous in cases where hydrophilic polymer was used in an ink-receiving layer.

## Claims

**1.** A resin composition for ink jet recording, the composition comprising:

(1) a water-absorbing polymer having a weight average molecular weight of 10,000 to 300,000 of the general formula

$$\{AX^1 AR^1\} \qquad (I)$$

in which $X^1$ is the residue of an organic compound having two active hydrogen atoms, $R^1$ is the residue of a dicarboxylic acid and A is

$$-(CH_2 CH_2 O)-$$

and

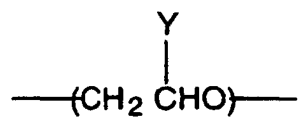

linked to form

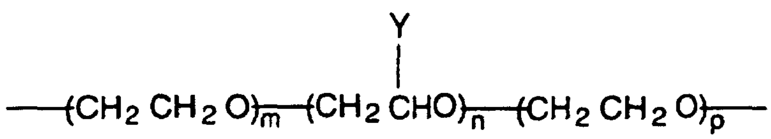

in which Y is a hydrocarbon group having two or more carbon atoms and each of m, n and p is an integer of 1 or more and predetermined to satisfy the conditions

$$44\,(\underline{m} + \underline{p})\,/n\ (\text{molecular weight of } [CH_2CHYO]) = 94/6 \text{ to } 80/20$$

and

$$p/(m + p) \geq 1/2;$$

and

(2) a cationic polymer having a weight average molecular weight of 1,000 to 50,000.

**2.** A resin composition according to claim 1, wherein the cationic polymer (2) has a linear and irregular structure comprising 65 to 99 mol% ethylene units of the formula

$$\{CH_2 CH_2\} \qquad (II);$$

not more than 15 mol% acrylate units of the general formula

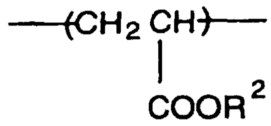

(III)

in which $R^2$ is an alkyl group having 1 to 4 carbon atoms; and

1 to 35 mol% acrylamide units of the general formula

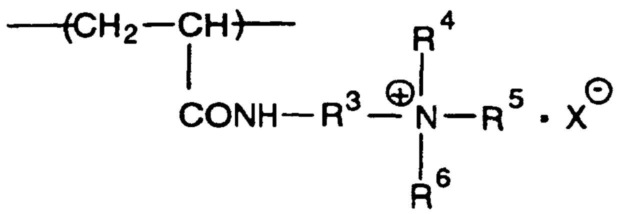

(IV)

in which $R^3$ is an alkylene group having 2 to 8 carbon atoms; each of $R^4$ and $R^5$ is an alkyl group having 1 to 4 carbon atoms; $R^6$ is hydrogen, an alkyl group having 1 to 12 carbon atoms, an aralkyl group having 7 to 12 carbon atoms or an alicyclic alkyl group having 6 to 12 carbon atoms; and $X^{\ominus}$ is halogen, $CH_3OSO_3^-$ or $C_2H_5OSO_3^-$.

**3.** A resin composition according to claim 1 or claim 2, wherein the weight ratio of the water-absorbing polymer (1) to the cationic polymer (2) is 50/50 to 99/1.

**4.** A resin composition according to any one of claims 1 to 3, further comprising (3) a cationic or non-ionic surface active agent.

**5.** A resin composition according to claim 4 which contains the cationic or non-ionic surface active agent (3) in an amount of 1 to 10% by weight.

**6.** An ink jet recording sheet comprising a substrate layer and an ink-receiving layer overlying the substrate layer, the ink-receiving layer comprising a resin composition according to any one of claims 1 to 5.

**7.** A method for ink jet recording using an ink jet recording sheet according to claim 6, which comprises adsorbing small droplets of water-based color ink through discharging to the ink-receiving layer.

**8.** A method for producing an ink jet recording sheet comprising the steps of: extruding a resin composition that constitutes a substrate layer into sheet form. extruding a resin composition according to any one of claims 1 to 5 into sheet form concurrently with the substrate layer, and forming layers from both resin compositions.

**Patentansprüche**

**1.** Harzzusammensetzung zur Tintenstrahlaufzeichnung, wobei die Zusammensetzung umfasst:

(1) ein wasserabsorbierendes Polymer mit einem gewichtsmittleren Molekulargewicht von 10.000 bis 300.000 der allgemeinen Formel

$$\{AX^1 AR^1\} \qquad (I)$$

worin $X^1$ der Rest einer organischen Verbindung mit zwei aktiven Wasserstoffatomen ist, $R^1$ der Rest einer Dicarbonsäure ist und A

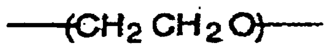 und 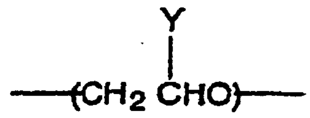

verbunden unter Bildung von

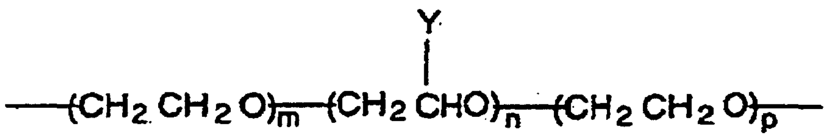

worin Y eine Kohlenwasserstoffgruppe mit zwei oder mehreren Kohlenstoffatomen ist und m, n und p jeweils eine ganze Zahl von 1 oder mehr sind und derartig vorbestimmt sind, dass sie die Bedingungen

$$44\,(m+p)/n\ (\text{Molekulargewicht von } [CH_2CHYO]) = 94/6 \text{ bis } 80/20$$

und

$$p/(m+p) \geq 1/2;$$

erfüllen, darstellt;
und
(2) ein kationisches Polymer mit einem gewichtsmittleren Molekulargewicht von 1.000 bis 50.000.

**2.** Harzzusammensetzung nach Anspruch 1, worin das kationische Polymer (2) eine lineare und irreguläre Struktur aufweist, welche 65 bis 99 Mol% Ethyleneinheiten der Formel

$$-(CH_2\ CH_2)- \quad (II);$$

nicht mehr als 15 Mol% Acrylateinheiten der allgemeinen Formel

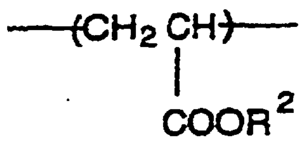 (III)

worin $R^2$ eine Alkylgruppe mit 1 bis 4 Kohlenstoffatomen ist; und
1 bis 35 Mol% Acrylamideinheiten der allgemeinen Formel

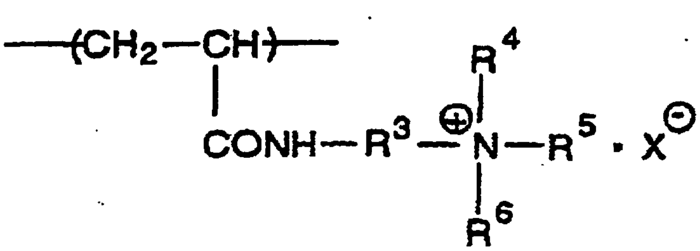 (IV)

worin $R^3$ eine Alkylengruppe mit 2 bis 8 Kohlenstoffatomen ist; $R^4$ und $R^5$ jeweils eine Alkylgruppe mit 1 bis 4 Kohlenstoffatomen sind; $R^6$ Wasserstoff, eine Alkylgruppe mit 1 bis 12 Kohlenstoffatomen, eine Arylgruppe mit 7 bis 12 Kohlenstoffatomen oder eine alicyclische Alkylgruppe mit 6 bis 12 Kohlenstoffatomen ist; und $X^{\ominus}$ Halogen, $CH_3OSO_3^-$ oder $C_2H_5OSO_3^-$ ist, umfasst.

**3.** Harzzusammensetzung nach Anspruch 1 oder Anspruch 2, worin das Gewichtsverhältnis des wasserabsorbierenden Polymers (1) zu dem kationischen Polymer (2) 50/50 bis 99/1 beträgt.

**4.** Harzzusammensetzung nach einem der Ansprüche 1 bis 3, welche weiterhin (3) ein kationisches oder nichtionisches oberflächenaktives Mittel umfasst.

**5.** Harzzusammensetzung nach Anspruch 4, welches das kationische oder nichtionische oberflächenaktive Mittel (3) in einer Menge von 1 bis 10 Gew.-% enthält.

**6.** Tintenstrahlaufzeichnungsblatt, umfassend eine Substratschicht und eine Tintenaufnahmeschicht, welche auf der Substratschicht liegt, wobei die Tintenaufnahmeschicht eine Harzzusammensetzung nach einem der Ansprüche 1 bis 5 umfasst.

**7.** Verfahren zur Tintenstrahlaufzeichnung unter Verwendung eines Tintenstrahlaufzeichnungsblatts nach Anspruch 6, welches das Absorbieren kleiner Tröpfchen einer wasserbasierten Farbtinte durch die Ausgabe auf die Tintenaufnahmeschicht umfasst.

**8.** Verfahren zur Herstellung eines Tintenstrahlaufzeichnungsblatts, umfassend die Schritte: Extrudieren einer Harzzusammensetzung, welche eine Substratschicht bildet, in Blattform; Extrudieren einer Harzzusammensetzung gemäß einem der Ansprüche 1 bis 5 in Blattform gleichzeitig mit der Substratschicht, und Ausbilden von Schichten aus beiden Harzzusammensetzungen.

## Revendications

**1.** Composition de résine pour enregistrement par jet d'encre, laquelle composition comprend :

1) un polymère hydroabsorbant dont la masse molaire moyenne en poids vaut de 10 000 à 300 000, de formule générale :

$$-[-AX^1\ AR^1-]- \quad (I)$$

dans laquelle $X^1$ représente le reste d'un composé organique qui possède deux atomes d'hydrogène actifs, $R^1$ représente le reste d'un acide dicarboxylique, et A représente des fragments de formules

$-(CH_2CH_2O)-$ et 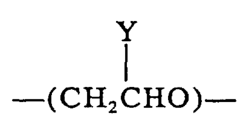

associés de manière à former

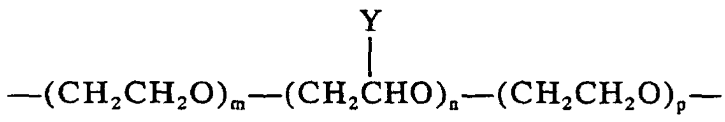

où Y représente un groupe hydrocarboné comportant deux atomes de carbone ou plus, et chacun des indices m, n et p est un nombre entier valant 1 ou plus, ces indices devant satisfaire les conditions suivantes :

$$44(m + p)/n(\text{masse molaire de } CH_2CHYO) = 94/6 \text{ à } 80/20$$

et

$$p/(m + p) \geq 1/2$$

2) et un polymère cationique dont la masse molaire moyenne en poids vaut de 1 000 à 50 000.

**2.** Composition de résine conforme à la revendication 1, dans laquelle le polymère cationique (2) présente une structure linéaire et irrégulière qui comporte 65 à 99 % en moles de motifs de type éthylène, de formule

$$-(CH_2\ CH_2)- \qquad (II)$$

au plus 15 % en moles de motifs de type acrylate, de formule générale

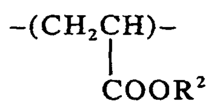

(III)

dans laquelle $R^2$ représente un groupe alkyle comportant 1 à 4 atomes de carbone,
et 1 à 35 % en moles de motifs de type acrylamide, de formule générale

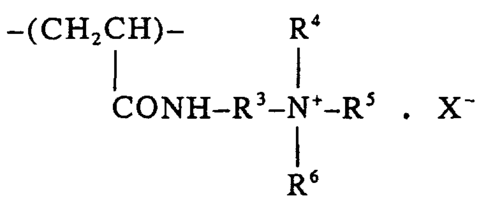

(IV)

dans laquelle $R^3$ représente un groupe alkylène comportant 2 à 8 atomes de carbone, chacun des symboles $R^4$ et $R^5$ représente un groupe alkyle comportant 1 à 4 atomes de carbone, $R^6$ représente un atome d'hydrogène, un groupe alkyle comportant 1 à 12 atomes de carbone, un groupe aralkyle comportant 7 à 12 atomes de carbone, ou un groupe alkyle alicyclique comportant 6 à 12 atomes de carbone, et $X^-$ représente un anion halogénure, $CH_3OSO_3^-$ ou $C_2H_5OSO_3^-$.

**3.** Composition de résine conforme à la revendication 1 ou 2, dans laquelle le rapport pondéral du polymère hydroabsorbant (1) au polymère cationique (2) vaut de 50/50 à 99/1.

**4.** Composition de résine conforme à l'une des revendications 1 à 3, qui comporte en outre

3) un agent tensioactif cationique ou non-ionique.

**5.** Composition de résine conforme à la revendication 4, qui contient de 1 à 10 % en poids de l'agent tensioactif cationique ou non-ionique (3).

**6.** Feuille pour enregistrement par jet d'encre, comprenant une couche de substrat et une couche de réception d'encre, superposée à la couche de substrat, dans laquelle feuille la couche de réception d'encre comprend une composition de résine conforme à l'une des revendications 1 à 5.

**7.** Procédé d'enregistrement par jet d'encre, où l'on se sert d'une feuille pour enregistrement par jet d'encre conforme à la revendication 6 et qui comporte l'adsorption de petites gouttelettes d'une encre couleur à base d'eau envoyées vers la couche de réception d'encre.

**8.** Procédé de production d'une feuille pour enregistrement par jet d'encre, comportant les étapes qui consistent à extruder en feuille une composition de résine formant une couche de substrat, à extruder en feuille, en même temps que cette couche de substrat, une composition de résine conforme à l'une des revendications 1 à 5, et à former des couches avec ces deux compositions de résine.